(19) **Europäisches Patentamt**

**European Patent Office**

**Office européen des brevets**

(11) Publication number: **0 035 491**
**B1**

(12) # EUROPEAN PATENT SPECIFICATION

(45) Date of publication of patent specification: **22.08.84**

(51) Int. Cl.³: **H 02 P 7/00, B 60 L 11/18**

(21) Application number: **79900456.9**

(22) Date of filing: **08.05.79**

(86) International application number:
**PCT/GB79/00065**

(87) International publication number:
**WO 80/02483 13.11.80 Gazette 80/26**

(54) **DIRECTIONAL CONTROL SYSTEM.**

(43) Date of publication of application:
**16.09.81 Bulletin 81/37**

(45) Publication of the grant of the patent:
**22.08.84 Bulletin 84/34**

(84) Designated Contracting States:
**DE FR GB**

(56) References cited:
**DE-C- 666 974**
**GB-A- 920 680**
**GB-A- 937 278**
**US-A-2 137 721**

**Funkschau, volume 49, no. 17, issued 1977 August, (München, DE), W. KREINBERG "Fahrtreglerschaltung mit Umpoleinrichtung für Schiffsmodelle", see page 805, left-hand column, line 25 to right-hand column, line 2; figure 2**

(73) Proprietor: **YALE MATERIALS HANDLING LIMITED**
**Waddensbrook Lane**
**Wednesfield West Midlands WV11 3SW (GB)**

(72) Inventor: **MOORE, John Brian**
**50 Milton Crescent Straits Estate**
**Dudley West Midlands DY3 3DR (GB)**
Inventor: **RICE, Derek William**
**10 Wyke Way Idsall Green**
**Shifnal Shropshire (GB)**

(74) Representative: **Slight, Geoffrey Charles et al**
**Graham Watt & Co. Riverhead**
**Sevenoaks Kent TN13 2BN (GB)**

Courier Press, Leamington Spa, England.

## Description

This invention relates to a directional control circuit for an electrically-driven vehicle such as a fork lift-truck.

Prior Art

Directional control of a fork lift truck is usually achieved by one of two basic systems, namely by providing

a) a three position hand operated switch providing visual indication of the direction of travel selected and a neutral position; or

b) two accelerator pedals for forward and reverse directions respectively.

Neither method is entirely satisfactory as both have inherent disadvantages for the truck operator. The first method, (a) above, as it involves use of the operator's hand, renders it impossible to reverse the direction of drive, i.e. to use electric braking, and simultaneously operate any of the truck hydraulic functions whilst retaining adequate control of steering of the truck.

The second method, (b) above, does not suffer from that particular disadvantage, but with an unfamiliar or inexperienced operator incorrect operation can result, with dangerous consequences. Moreover, this method so differs from normal automotive practice so as to be considered hazardous by many authoritative bodies.

It is an object of the present invention to provide a simple and effective directional control circuit that does not suffer from the aforementioned disadvantages.

It has also been proposed to control the drive direction by means of a single accelerator pedal which incorporates a surface plate which can tilt forward or backwards to determine the drive direction independently of the normal movement of the pedal (GB—A—920680). This method suffers from the general disadvantages of method b) as outlined above.

The present invention is a circuit for controlling the drive direction of an electrically driven vehicle, the circuit comprising forward and reverse contactor coils for controlling the drive direction and a sub-circuit in which contacts are arranged for energising either contactor coil and for changing over the energisation from one contactor coil to the other, characterised in that the sub-circuit includes a relay comprising the said contacts and a coil, the sub-circuit being additionally arranged to change over the energisation in response to a given control signal, which signal is the same irrespective of whether the existing drive direction is forward or reverse, and in that at least one manually actuable direction control switch is provided able to generate the control signal.

Drawings

An embodiment of the present invention will now be described, by way of example, with reference to the accompanying drawings, in which

Fig. 1 is a block diagram of part of a first embodiment of a drive control system of a fork-lift truck;

Fig. 2 is a view in elevation of an hydraulic function operating lever;

Fig. 3 is an enlarged section of part of Fig. 1; and

Fig. 4 is a block diagram of part of a second embodiment of a drive control according to the present invention.

Specific Embodiment

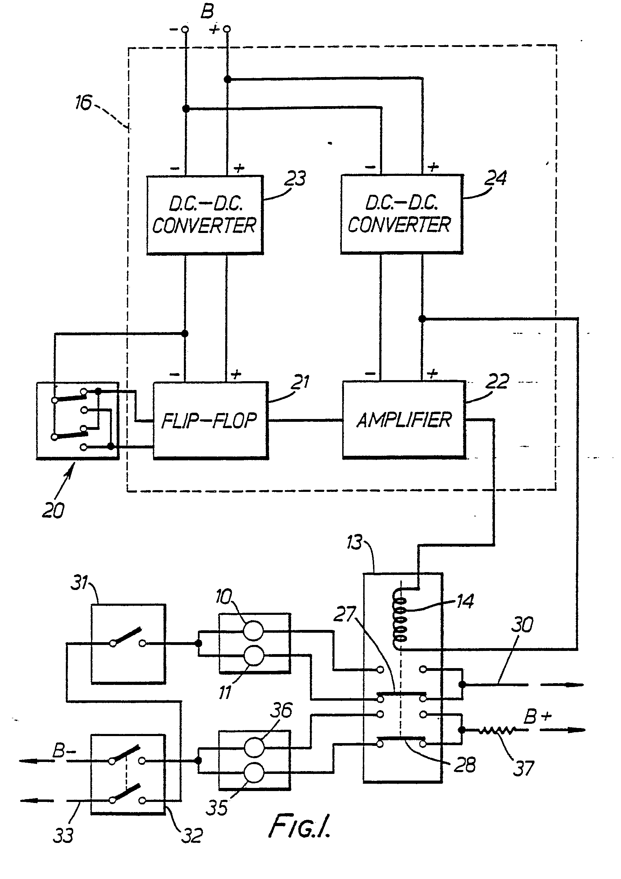

Referring now to Fig. 1, a circuit according to the present invention for controlling the drive direction of a fork-lift truck consists essentially of contactor coils 10 and 11, energisation of which determines the direction of drive, a relay 13 controlling energisation of the coils 10 and 11, a power supply circuit 16 for the coil 14 of the relay 13 and control switches 20 for supplying control signals to the circuit 16. It will, of course, be understood immediately that the circuit illustrated in Fig. 1 is not the complete drive control circuit for the truck and that in particular there are not shown in Fig. 1 the drive motor, its field circuits in which are located the contacts associated with the contactor coils 10 and 11 and the controller by means of which the output power of the main drive motor is regulated. All these are, however, well known in principle and the details of them are not relevant to the present invention.

The power supply 16 is connected to the terminals B+ and B− of the main battery of the fork-lift truck and comprises a D-type flip-flop 21 whose output is connected to an amplifier 22 which in turn controls the energisation of the relay coil 14. In the embodiment illustrated DC—DC converters 23 and 24 are provided between the battery terminals and the flip-flop 21 and amplifier 22 respectively to ensure appropriate supply voltages for the flip-flop and amplifier. The switches 20, as will be described in more detail later, are spring return switches connected in parallel to the signal input of the flip-flop so that actuation of any one of the switches 20 causes the flip-flop 21 to change its output. The output of the flip-flop 21 is either zero or a voltage which, after amplification by amplifier 22, is sufficient to operate the relay 13 and thus actuation of any one of the switches 20 changes the energisation of the relay coil 14 from the energised state to the de-energised state or *vice versa*, depending only on the state of energisation of the coil when the switch 20 is actuated.

The contacts of the relay 13 comprise two pairs of normally open contacts, two pairs of normally closed contacts, and two movable contacts 27 and 28 which bridge respective pairs of the normally closed contacts when the relay coil is, as illustrated, not energised and respective pairs of the normally open contacts when the relay coil 14 is energised.

The contact 27 bridges the normally closed pair of contacts as illustrated in a circuit comprising, in series, the controller (not illustrated), a conductor 30, the contact 27, the contactor coil 11 (the reverse contactor coil), a footswitch 31 in the accelerator pedal of the truck, first contacts of a neutral switch 32, a conductor 33 and the controller. When the relay 13 is energised the contact 27 bridges a normally open pair of contacts to substitute the contactor coil 10, the forward contactor coil, for the reverse contactor coil 11 in the above circuit.

Similarly, the movable contacts 28 cooperates with normally closed or normally open contacts to connect reverse or forward indicator lamps 35 and 36 respectively in a circuit across the main battery terminals and including a dropping resistor 37 and second contacts of the neutral switch 32.

It can now be seen that when the relay 13 is not energised, assuming the neutral switch 32 to be closed, the reverse indicator lamp 35 is energised and the reverse contactor coil 11 is energised if the footswitch 31 is closed, i.e. the circuit is set up for reverse movement of the truck. Similarly when the relay 13 is energised, the circuit is set up for forward movement of the truck.

Thus, in operation, when the truck operator wishes to change the direction of drive he need only actuate any one of the switches 20 long enough to toggle the flip-flop 21. When he wishes to revert to his original direction of drive, again all that is needed is a brief actuation of any one of the switches.

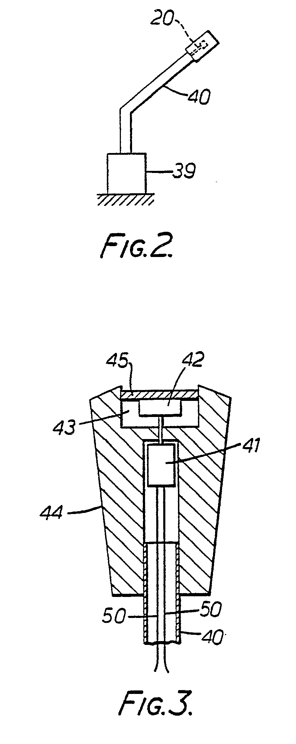

Fork-lift trucks are generally provided with a number of function control levers, typically as illustrated at 40 in Fig. 2. Each lever 40 is associated with an hydraulic valve block 39 and in this embodiment a switch 20 is built into the top end of the control lever, as seen in more detail in Fig. 3. The body 41 of the switch 20 is secured in position at the top of the lever 40 while the push-button spring biased switch actuator 42 is located in a recess 43 in the knob 44 at the end of the lever to prevent inadvertent operation of the switch. A flexible membrane 45, in this embodiment of rubber, seals the recess 43 against the ingress of dust and moisture. The switch is connected to the rest of the control circuit of Fig. 1 by cables 50 extending from the switch down the lever 40.

It can be seen that with the arrangement described the truck operator can change the drive direction of his vehicle using the same hand that is already involved in controlling one of the vehicle's hydraulic functions, leaving his other hand in full control of steering.

Modifications may be made to the embodiment described. In particular the circuit between the switches 20 and the relay coil 14 may be modified in a number of ways, it being necessary only that the switches 20 control the energisation of the coil.

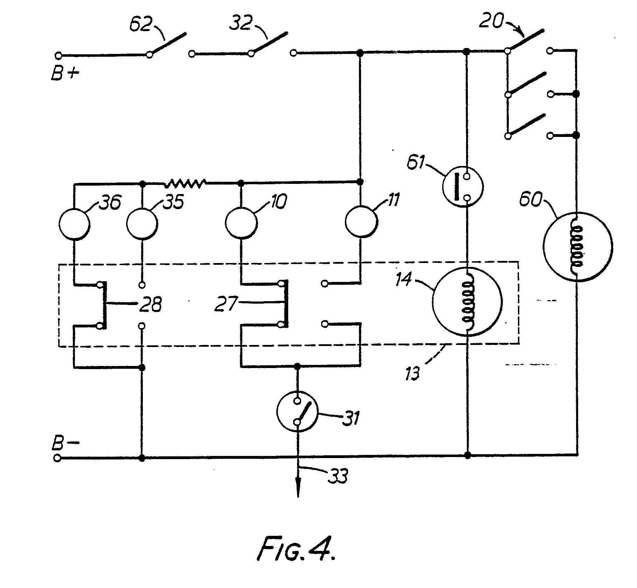

In the embodiment illustrated in Fig. 4, for example, in which the same reference numerals as in Fig. 1 have been used to denote corresponding circuit elements, the flip-flop 21 and amplifier 22 of Fig. 1 have been replaced by a latching relay having its coil 60 connected between the fixed contacts of the switches 20 and the battery terminal B— and its normally open contact 61 in series with the coil 14 of the relay 13. The switch 62 is the conventional keyswitch provided in fork-lift trucks.

Assuming that the switches 62 and 63 are closed, the operation of the embodiment of Fig. 4 is the same as that of Fig. 1. Each closure of a switch 20 will energise the coil 60 to change the condition of the contacts 61 of the latching relay and hence the energisation of the relay 13 to determine which of the contactor coils 10 and 11 is at any time energisable *via* the footswitch 31.

It should also be noted that electrical braking can be achieved by actuating any of the switches 20 to change the drive direction while the vehicle is moving.

## Claims

1. A circuit for controlling the drive direction of an electrically-driven vehicle, the circuit comprising forward and reverse contactor coils for controlling the drive direction and a sub-circuit in which contacts (27) are arranged for energising either contactor coil (10, 11) and for changing over the energisation from one contactor coil to the other, characterised in that the sub-circuit includes a relay (13) comprising the said contacts (27) and a coil (14), the sub-circuit being additionally arranged to change over the energisation in response to a given control signal, which signal is the same irrespective of whether the existing drive direction is forward or reverse, and in that at least one manually actuable direction control switch (20) is provided able to generate the control signal.

2. A circuit as claimed in claim 1, characterised in that the relay (13) connects one contactor coil for energisation when the relay coil (14) is energised and the other contactor coil for energisation when the relay coil (14) is de-energised, and that the manually actuable direction control switch (20) is connected to the signal input of a flip-flop circuit (21) having two output levels of which one is insufficient to energise the relay coil (14).

3. A circuit as claimed in claim 1, characterised by a latching relay (60, 61) having a coil (60) connected for energisation by the manually operable direction control switch and having contacts (61) controlling energisation of the coil (14) of the relay (13), the latching relay contacts changing their condition each time the coil of the latching relay is energised.

4. A circuit as claimed in any of claims 1 to 3, characterised by a pair of direction indicator lamps (35, 36) alternatively responsive to energisation of the relay (13) to indicate respective directions of drive selected.

5. A circuit as claimed in any preceding claim, characterised by a plurality of manually actuable direction selection switches (20) functionally connected in parallel and each able to generate the control signal.

6. A circuit as claimed in any preceding claim, characterised in that the or each manually actuable direction switch (20) is a spring return switch.

7. An electrically operated vehicle comprising a circuit as claimed in any preceding claim for controlling the drive direction, and a manual hydraulic function control lever (40) for operating an auxiliary function of the vehicle and characterised in that the manual function control lever (40) has associated therewith a manually actuable direction control switch (20), whereby a vehicle operator can change the existing direction of drive with the same hand with which he happens to be operating the function manual control (40).

8. A vehicle as claimed in claim 7, in which a plurality of manual function control levers are provided and characterised in that each said lever (40) has recessed in its end a manually actuable direction control switch (20).

## Patentansprüche

1. Schaltungsanordnung zum Steuern der Antriebsrichtung eines elektrisch angetriebenen Fahrzeugs, mit Vorwärts- und Rückwärts-Schützspulen zum Steuern der Antriebsrichtung und mit einer Hilfsschaltung, in der Kontakte (27) zum Erregen der einen oder der anderen Schützspule (10, 11) und zum Umschalten der Erregung von einer Schültzspule auf die andere vorgesehen sind, dadurch gekennzeichnet, daß die Hilfsschaltung ein Relais (13) aufweist, das mit den Kontakten (27) und einer Spule (14) versehen ist, wobei die Hilfsschaltung zusätzlich zum Umschalten der Erregung aufgrund eines vorbestimmten Steuersignals ausgelegt ist, welches das gleiche unabhängig davon ist, ob die vorherrschende Antriebsrichtung vorwärts oder rückwärts ist, und daß mindestens ein von Hand betätigbarer Richtungssteuerschalter (20) vorgesehen ist, mittels dessen das Steuersignal erzeugt werden kann.

2. Schaltungsanordnung nach Anspruch 1, dadurch gekennzeichnet, daß das Relais (13) eine Schützspule auf Erregung schaltet, wenn die Relaisspule (14) erregt wird, und die andere Schützspule auf Erregung schaltet, wenn die Relaisspule (14) entregt wird, und daß der von Hand betätigbare Richtungssteuerschalter (20) mit dem Signaleingang einer Flipflopschaltung (21) verbunden ist, die zwei Ausgangspegel hat, von denen der eine zum Erregen der Relaisspule (14) unzureichend ist.

3. Schaltungsanordnung nach Anspruch 1, gekennzeichnet durch ein Stromstoßrelais (60, 61) mit einer mittels des handbetätigbaren Richtungssteuerschalters erregbaren Spule (60) und Kontakten (61), welche die Erregung der Spule (14) des Relais (13) steuern, wobei die Stromstoßrelaiskontakte ihren Schaltzustand jedesmal ändern, wenn die Spule des Stromstoßrelais erregt wird.

4. Schaltungsanordnung nach einem der Ansprüche 1 bis 3, gekennzeichnet durch zwei Richtungsanzeigelampen (35, 36), die wechselweise auf die Erregung des Relais (13) zur Anzeige der jeweils gewählten Antriebsrichtung ansprechen.

5. Schaltungsanordnung nach einem der vorhergehenden Ansprüche, gekennzeichnet durch mehrere von Hand betätigbare Richtungswählschalter (20), die funktionsmäßig parallelgeschaltet sind und von denen jeder das Steuersignal erzeugen kann.

6. Schaltungsanordnung nach einem der vorhergehenden Ansprüche, dadurch gekennzeichnet, daß der oder jeder handbetätigte Richtungsschalter (20) ein Schalter mit Federrückstellung ist.

7. Elektrisch betriebenes Fahrzeug mit einer Schaltungsanordnung nach einem der vorhergehenden Ansprüche zum Steuern der Antriebsrichtung und einem Hydraulikfunktions-Handsteuerhebel (40) zum Steuern einer Hilfsfunktion des Fahrzeugs, dadurch gekennzeichnet, daß dem Funktionshandsteuerhebel (40) ein handbetätigbarer Richtungssteuerschalter (20) zugeordnet ist, so daß ein Fahrzeugführer die vorherrschende Antriebsrichtung mit der gleichen Hand ändern kann, mit der er die Handfunktionssteuerung (40) betätigt.

8. Fahrzeug nach Anspruch 7, bei dem mehrere Funktionshandsteuerhebel vorgesehen sind, dadurch gekennzeichnet, daß am Ende jedes der Hebel (40) ein handbetätigbarer Richtungssteuerschalter (20) eingelassen ist.

## Revendications

1. Un circuit pour commander le sens de marche d'un véhicule à traction électrique, le circuit comprenant des bobines de contacteur de marche avant et de marche arrière pour commander le sens de marche et un sous-circuit dans lequel des contacts (27) sont agencés pour exciter l'une ou l'autre bobine de contacteur (10, 11) et pour passer de l'excitation d'une bobine de contacteur à l'excitation de l'autre, caractérisé en ce que le sous-circuit comprend un relais (13) qui comporte lesdits contacts (27) et une bobine (14), le sous-circuit étant, en outre, agencé pour intervertir l'excitation en réponse à un signal de commande donné, signal qui est le même que le sens de marche existant soit la marche avant ou la marche arrière et en ce qu'il est prévu au moins un interrupteur (20) de commande de sens de marche actionnable manuellement qui est capable d'engendrer le signal de commande.

2. Un circuit tel que revendiqué dans la revendication 1, caractérisé en ce que le relais (13) connecte une bobine de contacteur afin de l'exciter lorsque la bobine (14) de relais est excitée et l'autre bobine de contacteur afin de l'exciter lorsque la bobine (14) de relais est désexcitée, et en ce que l'interrupteur de commande de sens de marche (20) actionnable manuellement est connecté à l'entrée de signal d'un circuit de bascule bistable (21) ayant deux niveaux de sortie dont l'un est insuffisant pour exciter la bobine (14) de relais.

3. Un circuit tel que revendiqué dans la revendication 1, caractérisé par un relais de verrouillage (60, 61) ayant une bobine (60) connectée de manière à être excitée par l'interrupteur de commande de sens de marche actionnable manuellement et ayant des contacts (61) qui commandent l'excitation de la bobine (14) du relais (13), les contacts du relais de verrouillage changeant d'état chaque fois que la bobine du relais de verrouillage est excitée.

4. Un circuit tel que revendiqué dans l'une quelconque des revendications 1 à 3, caractérisé par une paire de lampes (35, 36) indicatrices de sens de marche qui fonctionnent alternativement en réponse à l'excitation du relais (13) pour indiquer les sens de marche respectifs choisis.

5. Un circuit tel que revendiqué dans l'une quelconque des revendications précédentes, caractérisé par plusieurs interrupteurs (20) de sélection de sens de marche actionnables manuellement connectés fonctionnellement en parallèle et capables chacun d'engendrer le signal de commande.

6. Un circuit tel que revendiqué dans l'une quelconque des revendications précédentes, caractérisé en ce que l'interrupteur ou chaque interrupteur (20) de sens de marche actionnable manuellement est un interrupteur à rappel élastique.

7. Un véhicule mû à l'électricité comprenant un circuit tel que revendiqué dans l'une quelconque des revendications précédentes pour commander le sens de marche et un levier manuel (40) de commande de fonction hydraulique pour actionner une fonction auxiliaire du véhicule et caractérisé en ce qu'un interrupteur (20) de commande de sens de marche actionnable manuellement est associé au levier manuel (40) de commande de fonction de sorte que le conducteur du véhicule peut changer le sens de marche existant avec la main avec laquelle il est en train d'actionner la commande manuelle (40) de fonction.

8. Un véhicule tel que revendiqué dans la revendication 7, dans lequel il est prévu plusieurs leviers manuels de commande de fonction et charactérisé en ce qu'un interrupteur (20) de commande du sens de marche actionnable manuellement est encastré dans l'extrémité de chacun desdits leviers (40).

0 035 491

FIG.I.

FIG.2.

FIG.3.

**0 035 491**

Fig.4.